# FASCICULE DE BREVET EUROPEEN

(11) **EP 2 045 447 B1**
(45) Date de publication et mention de la délivrance du brevet: **08.07.2015**
(21) Numéro de dépôt: 08165848.6
(22) Date de dépôt: 03.10.2008
(51) Int. Cl.: F01D 25/16, F01D 9/06, F02C 7/32, F01D 25/18

(54) **Carter intermédiaire de turboréacteur et turboréacteur associé**
Zwischengehäuse eines Turbinenstrahltriebwerks und zugehöriges Turbinenstrahltriebwerk
Intermediate casing of a turbofan engine and corresponding turbofan engine

(30) Priorité: 04.10.2007 FR 0706977
(43) Date de publication de la demande: 08.04.2009
(73) Titulaire: SNECMA, 75015 Paris (FR)
(72) Inventeur: Duchatelle, Thierry, 94000 Creteil (FR); Verseux, Philippe, 91210 Draveil (FR)
(74) Mandataire: Bringer, Mathieu

(56) Documents cités:
- GB-A- 926 947
- US-A- 2 566 049
- US-A- 3 907 386

## Description

La présente invention concerne le domaine des turboréacteurs, notamment des turboréacteurs à flux multiples et à double flux en particulier.

Un turboréacteur à double flux dans les applications civiles pour entraîner les avions commerciaux assurant le trafic passager ou de fret comprend généralement un rotor de soufflante avant dont le flux sortant est séparé en deux flux concentriques, primaire et secondaire. Le flux primaire est guidé vers le turbomoteur qui entraîne notamment le rotor de soufflante; le flux secondaire est soit rejeté directement dans l'atmosphère en fournissant une part essentielle de la poussée, soit mélangé en aval de la turbine avec le flux primaire chaud avant éjection.

Le turbomoteur comprend des étages de compresseur supplémentaires, une section de combustion et plusieurs étages de turbine dont le dernier entraîne la soufflante.

Les équipements assurant le fonctionnement du moteur sont pilotés, alimentés ou en communication avec l'extérieur du moteur par un ensemble de câbles, d'arbres de transmission et de canalisations que l'on désigne par le terme général de servitudes. Les servitudes comprennent ainsi :
- Des canalisations parcourues par des fluides hydrauliques tels que des alimentations ou des retours d'huile de lubrification ou de refroidissement;
- Des organes mécaniques de transmission de puissance, pour entraîner le boîtier d'engrenages des auxiliaires notamment;
- Des canaux de ventilation;
- Des câbles électriques tels que ceux reliés aux différents capteurs par exemple.

Les servitudes sont généralement en partie logées dans les bras structuraux du carter intermédiaire pour la traversée radiale des flux primaire et secondaire. Le carter intermédiaire est un élément de stator en forme de roue avec une partie formant moyeu et une virole extérieur cylindrique, communiquant avec un boîtier d'entraînement des machines auxiliaires, plus connu sous son abréviation anglaise AGB. Ces deux éléments sont reliés par une pluralité de bras radiaux structuraux.

Dans la mesure où les bras structuraux traversent les flux de gaz moteurs, on souhaite en réduire le nombre et leur encombrement. Pour les gros moteurs, de grand diamètre, le passage des servitudes dans les bras ne pose pas de problème particulier car la place disponible est suffisante. La dimension et le nombre de bras permettent de ménager des passages de sections adaptées aux contraintes dimensionnelles des servitudes. On peut loger par exemple une canalisation d'huile dans un bras et un arbre d'entraînement des machines auxiliaires dans un bras adjacent. Le problème est délicat à résoudre lorsque le moteur est de plus faible diamètre. Dans ce cas la veine de gaz moteur a une section plus faible et, pour ne pas pénaliser les performances aérodynamiques, on est amendé à réduire le nombre de bras et les dimensions de ces derniers. Cependant, les servitudes, que le moteur soit de puissance ou de diamètre grand ou moyen, restent les mêmes avec sensiblement le même encombrement. Il s'ensuit une place disponible réduite pour les servitudes dans le cas de moteur de section plus faible.

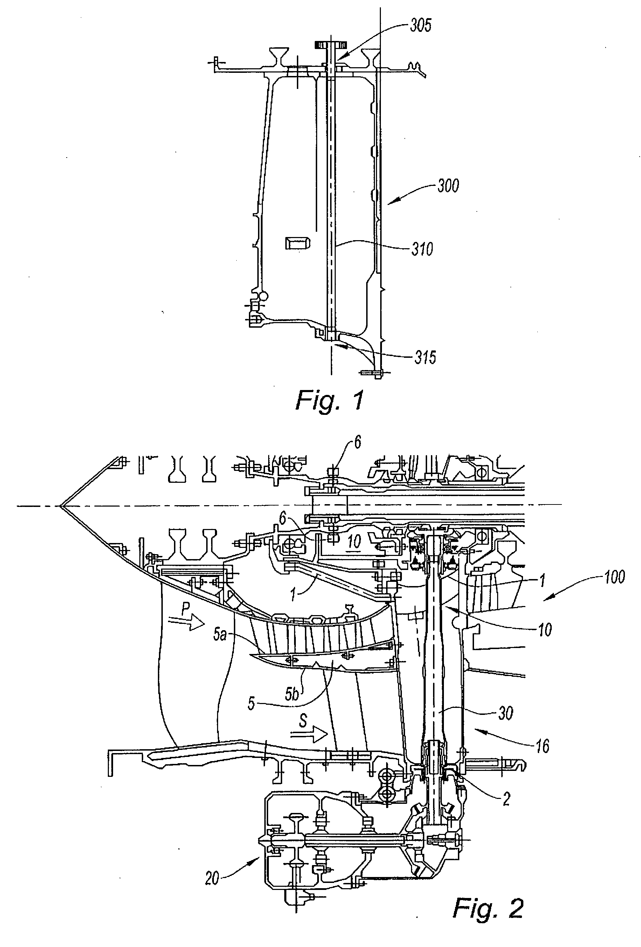

Par exemple sur la figure 1, un bras 300 de l'art antérieur est formé d'une pièce obtenue par coulée de métal dans un moule de forme appropriée. Il est équipé d'un tube d'huile 310 logé dans des perçages 305, 315 pratiqués dans les parois transversales haute et basse du bras. Ces différents éléments requièrent la mise en place de moyens d'étanchéité dans les zones frontières au niveau des perçages. La maintenance de ce tube 310 peut ne pas être aisée si le montage de l'ensemble dans l'avion ne permet pas une bonne accessibilité. On voit sur cette figure que, malgré sa section relativement faible par rapport au passage disponible dans le bras, le tube en occupe une part relativement importante en raison de l'espace libre qu'il est nécessaire de laisser avec les parois. L'encombrement induit procure d'autant moins de place disponible pour une autre servitude. Notamment, un arbre tournant d'entraînement des machines auxiliaires serait trop près du, tube.

Il est connu, d'après la demande de brevet FR2899272, un carter intermédiaire dont un bras est une pièce venue de fonderie avec une cloison étanche longitudinale ménageant un premier passage pour les canalisations d'huile et un deuxième passage pour loger les servitudes et, plus particulièrement un arbre de transmission mécanique. L'étanchéité de la cloison permet d'associer le passage de fluides à celui d'autres servitudes sans risquer des pollutions de l'un à l'autre qui seraient susceptibles d'engendrer des dysfonctionnements.

Le brevet US 3,907,386 de Kasmarik et al. décrit un palier de support d'un arbre de transmission mécanique dans lequel est ménagé un passage étanche de canalisation d'huile.

Étant donné que la cloison vient de fonderie, la configuration des passages dans le bras est fixée de .manière définitive, empêchant toute modification et réagencement des servitudes. De plus, l'encombrement d'un tel bras demeure important, pénalisant les performances aérodynamiques du moteur.

La présente invention a donc pour objet le passage de servitudes à travers le carter intermédiaire et plus particulièrement dans un bras structural dudit carter de manière à conserver des dimensions minimales, en optimisant l'espace intérieur au bras.

Afin de pallier certains de ces inconvénients, la demanderesse propose un carter selon la revendication 1.

Le carter selon l'invention permet de rassembler, au sein d'un unique compartiment de taille restreinte, le passage de l'huile de lubrification avec celui de l'arbre qui étaient traditionnellement séparés. Un tel carter, avec des bras de dimensions réduites, permet de diminuer les maîtres couples des bras dans les flux primaire et secondaire.

Des jeux calibrés sont ménagés entre les extrémités de l'arbre de transmission et des ouvertures formées dans le moyeu interne et la virole cylindrique externe respectivement. Les jeux calibrés permettent de réguler le débit de fluide de lubrification entre une enceinte avant du turboréacteur - délimitée en partie par le moyeu interne -, le volume intérieur du bras radial et le boîtier d'entraînement des machines auxiliaires - délimité en partie par la virole cylindrique externe -.

Selon une autre caractéristique de l'invention, le carter comprenant au moins une cloison annulaire de séparation de flux gazeux en deux flux annulaires concentriques (P et S), le bras radial comprend une première partie C traversant le flux primaire P, une deuxième partie C2 traversant le flux secondaire S, la partie C1 du bras étant plus étroite que la partie C2.

L'épaisseur du bras est adaptée afin que ce dernier occupe un volume minimum dans la veine du flux primaire dont la section est faible.

La partie du bras radial traversant le flux secondaire (S) comporte des nervures de renfort longitudinales, qui sont de préférence ajourées.

Les nervures de renfort permettent de renforcer la rigidité du bras en évitant son flambage, c'est-à-dire une compression du bras à ses extrémités. Les nervures sont avantageusement ajourées pour ne pas augmenter la masse du bras radial.

De préférence encore, l'arbre de transmission est monobloc.

L'invention concerne également un turboréacteur comportant une enceinte avec des paliers, un boîtier d'entraînement des machines auxiliaires et un carter intermédiaire dont ledit bras radial met en communication ladite enceinte avec ledit boîtier d'entraînement des machines auxiliaires.

De préférence, le boîtier d'entraînement des machines auxiliaires comprend un réservoir d'huile qui est mis en communication avec l'enceinte par le bras radial.

On décrit maintenant un mode de réalisation de l'invention en référence aux dessins annexés sur lesquels :
- La figure 1 montre en coupe longitudinale un bras de carter intermédiaire, selon l'art antérieur;
- La figure 2 montre en coupe longitudinale un turboréacteur avec un carter conforme à l'invention;
- La figure 3 montre en coupe longitudinale un bras du carter intermédiaire de la figure 2;
- La figure 4A représente une vue en coupe axiale du bras de la figure 3 selon le plan de section A-A; et
- La figure 4B représente une vue en coupe axiale du bras de la figure 3 selon le plan de section B-B.

La figure 2 montre un carter intermédiaire 100, avec un moyeu central 1 et une virole externe 2, reliés par un bras radial 16 disposé verticalement dans la partie inférieure. Le moyeu central 1 délimite partiellement le volume d'une enceinte avant 10 du turboréacteur dans laquelle sont montés des paliers 6 supportant les arbres de rotor basse (BP) et haute pression (HP). Un boîtier d'entraînement des machines auxiliaires 20 est monté sur la virole externe cylindrique 2 du carter 100. Les machines auxiliaires sont entraînées par un arbre de transmission monobloc 30, monté dans le bras radial 16 et agencé pour prélever de la puissance sur les arbres de rotor BP et HP supportés dans l'enceinte avant 10.

Un séparateur 5 délimite le flux primaire P du flux secondaire S. Ce séparateur est formé de deux parois annulaires 5a et 5b divergentes traversées par le bras radial 16, le flux primaire étant ici de section plus faible par rapport au flux secondaire.

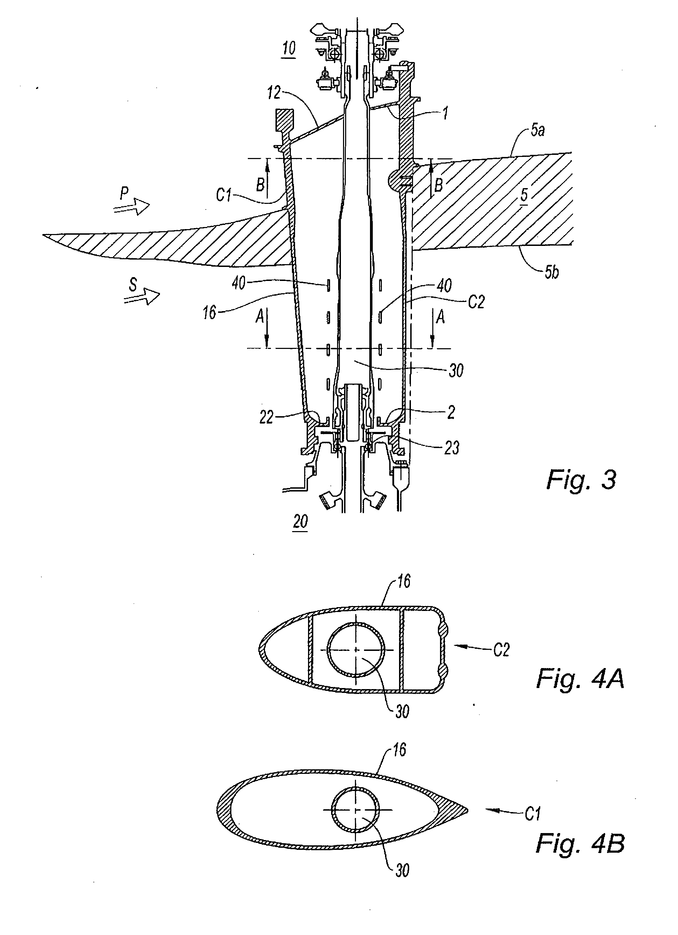

La figure 3 montre une coupe du carter 100 de la figure 2 dans le plan vertical passant par l'axe du moteur et le bras inférieur 16. Cette coupe montre le bras 16, la virole 2, le moyeu 1 et les parois 5a et 5b du séparateur à l'intérieur du carter. Le flux primaire est représenté par les flèches P ; le flux secondaire par les flèches S.

Le bras 16 creux est formé de deux parties radiales dans le prolongement les unes des autres : une première partie C1 traverse le flux primaire P, une deuxième partie C2 traverse le flux secondaire S. Ils sont de géométrie adaptée. Ainsi, la partie C1 du bras est plus étroite que la partie C2. Cette différence de géométrie est plus visible sur les vues en coupe du bras radial 16 représentées sur les figures 4A et 4B.

La géométrie de l'arbre de transmission 30 est également adaptée, le diamètre de l'arbre 30 étant plus important dans la partie C2 du bras radial 16 que dans la partie C1.

Le volume intérieur du bras radial 16 est constitué d'un unique compartiment permettant de conduire un fluide de lubrification, tel que de l'huile. Le fluide de lubrification est directement en contact avec les parois du bras 16 ainsi qu'avec la surface extérieure de l'arbre de transmission 30. Le bras radial 16 met en communication l'enceinte avant 10 avec le boîtier d'entraînement des accessoires 20 pour lubrifier les paliers 6 et limiter ainsi leur usure et leur échauffement.

Dans l'exemple présent, le volume intérieur du bras radial 16 permet d'évacuer l'huile provenant de l'enceinte avant 10 vers le boîtier d'entraînement des machines auxiliaires 20.

En référence à la figure 3, l'arbre de transmission 30, monté dans le compartiment rempli de fluide de lubrification, traverse des ouvertures formées respectivement dans des surfaces transversales 12, 22 du moyeu interne 1 et de la virole cylindrique externe 2, les extrémités de l'arbre 30 étant respectivement montées dans des paliers de guidage 13, 23 fixés dans l'enceinte avant 10 et le boîtier d'entraînement des machines auxiliaires 20.

Les jeux entre l'arbre de transmission 30 et les ouvertures dans les parois transversales 12, 22 sont calibrés pour réguler le débit de fluide de lubrification entre l'enceinte avant 10, le volume intérieur du bras radial 16 et le boîtier d'entraînement des accessoires 20. Cela est rendu possible en fabrication en mettant en place une classe de propreté appropriée, équivalente notamment à celle de l'enceinte huile. En outre elle est moins critique dans la mesure où l'arbre de transmission est d'une pièce sans palier intermédiaire.

Des nervures de renfort 40, formées longitudinalement et intérieurement au bras radial 16, permettent de renforcer la rigidité du bras 16. Les nervures de renfort 40 sont avantageusement ajourées pour ne pas augmenter la masse du bras radial 16 et, ce, sans affecter la rigidité de l'ensemble.

Le bras radial 16 peut également mettre en communication fluidique l'enceinte avant 10, comportant les paliers 6 de support des arbres BP et HP, avec un réservoir d'huile disposé dans le boîtier d'entraînement des machines auxiliaires 20 pour assurer l'évacuation, l'alimentation ou la pressurisation en huile de l'enceinte avant 10.

D'autres servitudes peuvent être incorporées dans le bras radial tels que des câbles, des canalisations ou des arbres supplémentaires.

## Revendications

1. Carter intermédiaire de turboréacteur à double flux comportant au moins une cloison (5) annulaire de séparation de flux gazeux en deux flux annulaires concentriques (P et S), primaire et secondaire respectivement, et entre un moyeu interne (1) et une virole cylindrique externe (2), une pluralité de bras radiaux (16) dont l'un au moins est creux et comprend une première partie (C1) traversant le flux primaire (P), une deuxième partie (C2) traversant le flux secondaire (S), un arbre de transmission radial (30) d'entraînement des machines auxiliaires étant monté rotatif dans ledit bras radial (16), une première extrémité de l'arbre de transmission (30) traversant le moyeu interne (1) et la seconde extrémité traversant la virole cylindrique externe (2), carter **caractérisé par le fait que** le volume intérieur du bras radial est constitué d'un seul compartiment logeant l'arbre de transmission (30) et formant un passage pour un fluide de lubrification.

2. Carter intermédiaire selon la revendication 1, dans lequel des jeux calibrés sont ménagés entre les extrémités de l'arbre de transmission (30) et des ouvertures formées dans le moyeu interne (1) et la virole cylindrique externe (2) respectivement.

3. Carter intermédiaire selon l'une des revendications 1 à 2, dans lequel ladite première partie (C1) du bras (16) est plus étroite que ladite deuxième partie (C2).

4. Carter intermédiaire selon la revendication 3, dans lequel la partie (C2) du bras radial (16) traversant le flux secondaire (S) comporte des nervures de renfort longitudinales (40).

5. Carter intermédiaire selon la revendication 4, dans lequel les nervures de renfort (40) sont ajourées.

6. Carter intermédiaire selon l'une des revendications 1 à 5, dans lequel l'arbre de transmission (30) est monobloc.

7. Turboréacteur comportant une enceinte (10) avec des paliers (6), un boîtier d'entraînement des machines auxiliaires (20) et un carter intermédiaire selon l'une des revendications 1 à 6 dont ledit bras radial (16) met en communication ladite enceinte (10) avec ledit boîtier d'entraînement des machines auxiliaires (20).

8. Turboréacteur selon la revendication 7, dans laquelle le boîtier d'entraînement des machines auxiliaires (20) comprend un réservoir d'huile qui est mis en communication avec l'enceinte (10) par le bras radial (16).

## Patentansprüche

1. Zwischengehäuse für Zweistrom-Strahltriebwerk, aufweisend mindestens eine Ringwand (5) zur Teilung von Gasströmen in zwei konzentrische Ringströme (P und S), einen primären bzw. einen sekundären, und, zwischen einer inneren Nabe (1) und einer äußeren zylindrischen Hülse (2), eine Vielzahl von radialen Armen (16), von denen wenigstens einer hohlförmig ist und einen ersten Teil (C1) umfasst, der den Primärstrom (P) durchquert, einen zweiten Teil (C2), der den Sekundärstrom (S) durchquert, wobei eine radiale Antriebswelle (30) zum Antreiben der Hilfsmaschinen in dem radialen Arm (16) drehbar montiert ist, wobei ein erstes Ende der Antriebswelle (30) die innere Nabe (1) durchquert und wobei das zweite Ende die äußere zylindrische Hülse (2) durchquert, wobei das Gehäuse **dadurch gekennzeichnet ist, dass** das Innenvolumen des radialen Arms von einem einzigen Raum gebildet ist, der die Antriebswelle (30) aufnimmt und einen Durchgang für ein Schmierfluid bildet.

2. Zwischengehäuse nach Anspruch 1, wobei kalibrierte Spiele zwischen den Enden der Antriebswelle (30) und Öffnungen, die in der inneren Nabe (1) bzw. der äußeren zylindrischen Hülse (2) gebildet sind, vorgesehen sind.

3. Zwischengehäuse nach einem der Ansprüche 1 bis 2, wobei der erste Teil (C1) des Arms (16) enger ist als der zweite Teil (C2).

4. Zwischengehäuse nach Anspruch 3, wobei der Teil (C2) des radialen Arms (16), der den Sekundärstrom (S) durchquert, längsgerichtete Verstärkungsrippen (40) aufweist.

5. Zwischengehäuse nach Anspruch 4, wobei die Verstärkungsrippen (40) durchbrochen sind.

6. Zwischengehäuse nach einem der Ansprüche 1 bis 5, wobei die Antriebswelle (30) einstückig ausgebildet ist.

7. Strahltriebwerk, aufweisend einen Raum (10) mit Lagern (6), ein Antriebsgehäuse für die Hilfsmaschinen (20) und ein Zwischengehäuse nach einem der Ansprüche 1 bis 6, dessen radialer Arm (16) den Raum (10) mit dem Antriebsgehäuse der Hilfsmaschinen (20) in Verbindung setzt.

8. Strahltriebwerk nach Anspruch 7, wobei das Antriebsgehäuse der Hilfsmaschinen (20) einen Öltank umfasst, der über den radialen Arm (16) mit dem Raum (10) in Verbindung gesetzt ist.

## Claims

1. An intermediate casing of a bypass flow turbojet comprising, at least one annular separator (5) for separating a gas flow into two concentric annular flows (P, S), primary and secondary, respectively, and between an inner hub (1) and an outer cylindrical shroud (2), a plurality of radial arms (16), at least one of which is hollow and comprises a first portion (C1) passing through the main flow (P) and a second portion (C2) passing through the bypass flow (S), a radial transmission shaft (30) for driving the auxiliary machines being mounted rotatably in said radial arm (16), a first end of the transmission shaft (30) passing through the inner hub (1) and the second end passing through the outer cylindrical shroud (2), a casing wherein the inner volume of the radial arm consists of a single compartment housing the transmission shaft (30) and forming a passageway for a lubrication fluid.

2. The intermediate casing as claimed in claim 1, wherein calibrated clearances are arranged between the ends of the transmission shaft (30) and openings formed in the inner hub (1) and the outer cylindrical shroud respectively.

3. The intermediate casing as claimed in any one of claims 1 and 2, wherein the first portion (C1) of the arm (16) is narrower than the second portion (C2).

4. The intermediate casing as claimed in claim 3, wherein the portion (C2) of the radial arm (16) passing through the bypass flow (S) comprises longitudinal reinforcing ribs (40).

5. The intermediate casing as claimed in claim 4, wherein the reinforcing ribs (40) have holes in them.

6. The intermediate casing as claimed in any one of claims 1 to 5, wherein the transmission shaft (30) is one-piece.

7. A turbojet comprising an enclosure with bearings, an accessory gearbox of auxiliary machines (20) and an intermediate casing as claimed in anyone of claims 1 to 6 wherein said radial arm (16) places said enclosure (10) in communication with said accessory gearbox of the auxiliary machines (20).

8. The turbojet as claimed in claim 7, wherein the accessory gearbox of the auxiliary machines (20) comprises an oil reservoir that is placed in communication with the enclosure (10) by the radial arm (16).
